# EUROPEAN PATENT SPECIFICATION

(11) **EP 0 334 523 B1**
(45) Date of publication and mention of the grant of the patent: **13.12.1995**
(21) Application number: 89302449.7
(22) Date of filing: 13.03.1989
(51) Int. Cl.: G06F 15/76, G06F 12/06

(54) **Microprocessor**
Mikroprozessor
Microprocesseur

(30) Priority: 18.03.1988 JP 66140/88
(43) Date of publication of application: 27.09.1989
(73) Proprietor: FUJITSU LIMITED, Kawasaki-shi, Kanagawa 211 (JP); FUJITSU VLSI LIMITED, Kasugai-shi Aichi 487 (JP)
(72) Inventor: Yamaguchi,Satoru, Nagoya-shi, Aichi,463 (JP); Takahashi,Hitoshi, Kasugai-shi, Aichi,487 (JP)
(74) Representative: Fane, Christopher Robin King

(56) References cited:
- EP-A- 0 157 075
- US-A- 4 342 095
- INTERNATIONAL CONFERENCE ON ACOUSTICS, SPEECH, AND SIGNAL PROCESSING, Dallas, Texas, 6th - 9th April 1987, pages 523-526, IEEE, New York, US; K.L. KLOKER: "The architecture and applications of the motorola DSP56000 digital signal processor family"
- ELECTRONIC ENGINEERING, vol. 51, no. 622, May 1979, page 25; S. BENNET et al.: "ROM decoder for memory mapped mup systems"
- MEASUREMENT AND CONTROL, vol. 10, no. 5, May 1977, page 178; "Mapping memory with a PROM"

## Description

### BACKGROUND OF THE INVENTION

The present invention generally relates to microprocessors, and more particularly to a microprocessor which is developed by use of a piggy chip and an evaluation chip.

Generally, in a large scale integrated circuit having a one-chip structure and especially in a microprocessor, an evaluation chip is used in an initial stage of the development of the microprocessor. The evaluation chip has no mask read only memory (ROM) for storing programs. For this reason, a so-called piggy back type package which may be mounted with an external memory (piggy chip) is used. In this type of a microprocessor, the programs stored in the external memory are executed for the purpose of developing the software and carrying out function tests. When the functions satisfying a desired specification are obtainable, the development process advances to a mask data write process for writing the software into the mask ROM. The designing of the hardware portion excluding the ROM is already completed when carrying out this mask data write process. Thus, the designing of the logic, the circuit and the mask pattern is omitted for this completed hardware portion, and it is possible to produce different kinds of microprocessors having different software functions.

But in such a microprocessor, the addresses allocated for the ROM, a random access memory (RAM) and an input/output interface are fixed. That is, the so-called memory map is fixed. As a result, when mass producing a family of microprocessor chips which only differ in the memory capacities of the respective ROMs, for example, it is necessary to prepare a number of evaluation chips corresponding to a number of ROM versions. Therefore, there is a problem in that the cost of developing such a family of microprocessor chips becomes high.

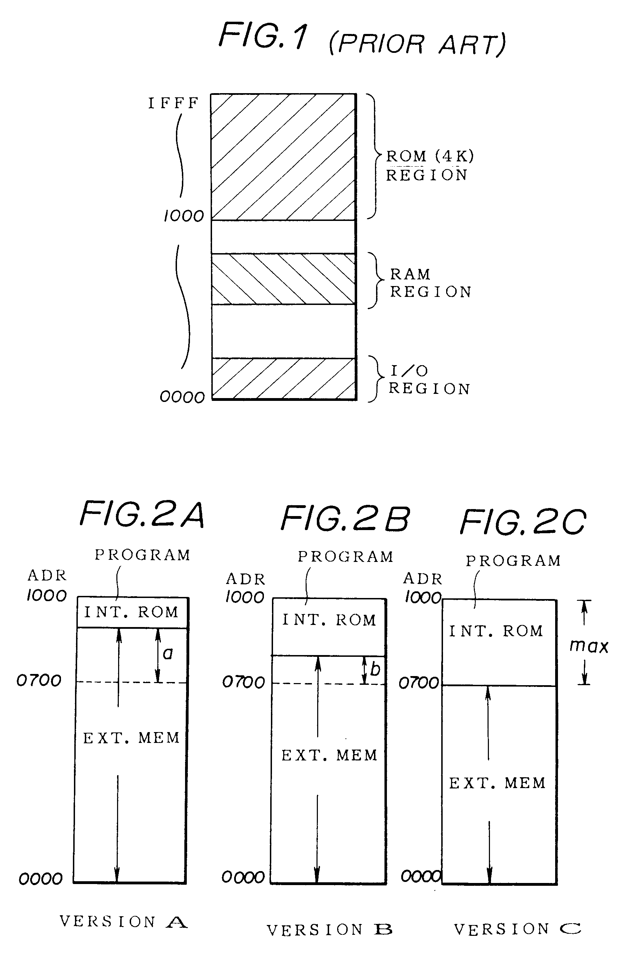

FIG.1 shows an example of a memory map of conventional microprocessor when the memory capacity of the ROM is 4 kbytes. In this case, an address region allocated for an external programmable (ROM) and the like at the time of the evaluation corresponds only to a "ROM region" shown in FIG.1. Address regions respectively allocated for the RAM and the input/output interface are indicated as "RAM region" and I/O region". Accordingly, an evaluation chip for use in evaluating the microprocessor having the ROM with the 4 kbyte memory capacity cannot be used for an accurate evaluation of different versions of the microprocessor having ROMs with 8 kbyte and 16 kbyte memory capacities, for example, even though the hardwares of these different versions of the microprocessor excluding the ROMs are the same.

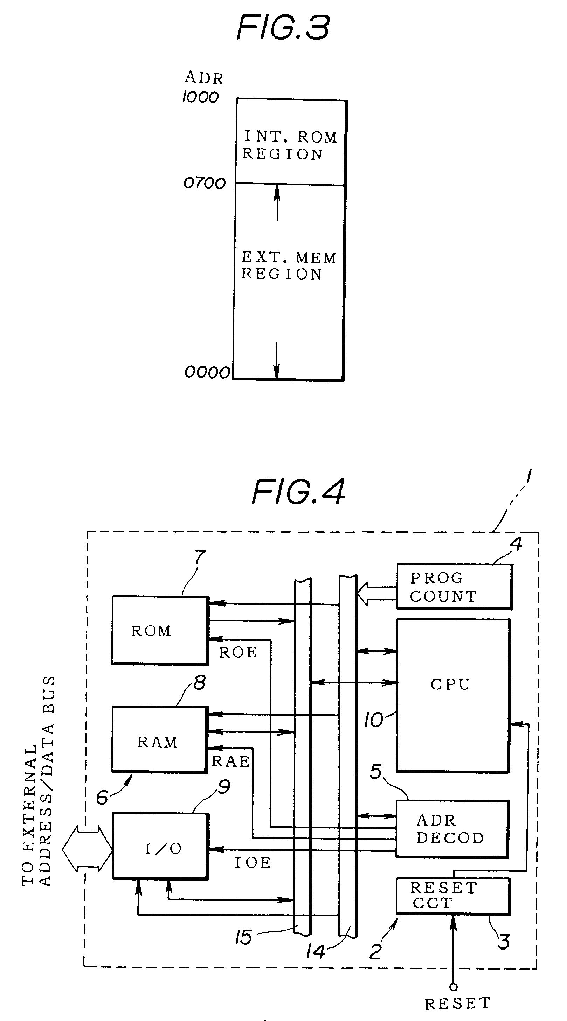

A description will now be given of the problems which are introduced when different versions of the microprocessor chip are evaluated by use of the same evaluation chip. FIGS.2A, 2B and 2C respectively show memory maps of versions A, B and C of the microprocessor chip. As may be seen from FIGS.2A, 2B and 2C, the ROM of the version A microprocessor chip has the smallest memory capacity, the ROM of the version B microprocessor chip has the intermediate memory capacity and the ROM of the version C microprocessor chip has the largest memory capacity. In this case, the memory map of the evaluation chip is set as shown in FIG.3 and the addresses allocated for the ROM is matched to that of the version C microprocessor having the ROM with the largest memory capacity.

The evaluation of the version C microprocessor chip can be carried out satisfactorily by use of the evaluation chip having the memory map shown in FIG.3 because a ROM enable signal is generated only in the memory region allocated for the ROM of the version C microprocessor chip. However, when evaluating the version A (or B) microprocessor chip by use of the same evaluation chip, a ROM enable signal is also generated in a memory region a (or b) which actually is not allocated for the ROM of the version A (or B) microprocessor chip. As a result, an accurate evaluation of the version A (or B) microprocessor chip cannot be made by use of the evaluation chip which has the memory map shown in Fig. 3.

US-A-4 342 095 discloses a microprocessor according to the preamble of accompanying claim 1. The microprocessor is used in a system having external memory such as a ROM and RAM.

"Electronic Engineering", Vol. 51, No. 622, May 1979, page 25, "ROM decoder for memory mapped »P system", discloses a microprocessor system using a ROM to decode an address bus so as to provide greater flexibility in setting a memory map.

According to the present invention, there is provided a single-chip microprocessor comprising a central processing unit for carrying out operations on data in dependence on commands of a program, said data and program being stored in a memory;
characterised by:-
a memory part including a memory for storing the program;
holding means arranged to receive address region information at a predetermined timing and to hold the address region information, said address region information indicating an allocation of a predetermined address region for said memory;
address generating means for generating an address of a command which is to be executed next; and
access enable means for enabling access to said memory when the address generated by said address generating means is included in said predetermined address region.

An embodiment of the present invention may provide a microprocessor which enables the use of a common evaluation chip for the evaluation of different versions of the microprocessor having ROMs with different memory capacities.

Thus, it is possible to make a programmable memory mapping by merely changing the address region information. Hence, even when there are different versions of the microprocessor respectively having a ROM with different memory capacities, for example, it is possible to use a single evaluation chip to evaluate these different versions of the microprocessor by appropriately changing a portion of the address region information. Therefore, it is possible to considerably reduce the cost of developing the microprocessor.

Reference is made, by way of example, to the accompanying drawings, in which:-
Fig. 1 generally shows an example of a memory map of a conventional microprocessor;
Figs. 2A to 2C respectively show memory maps of different versions of the microprocessor;
Fig. 3 shows a memory map of a conventional evaluation chip for use in evaluating the different versions of the microprocessor;
Fig. 4 is a system block diagram showing an embodiment of a microprocessor according to the present invention;
Fig. 5 is a system block diagram showing the microprocessor shown in Fig. 4 in an initial stage of development; and
Fig. 6 is a system circuit diagram showing an essential part of the microprocessor shown in Fig. 4.

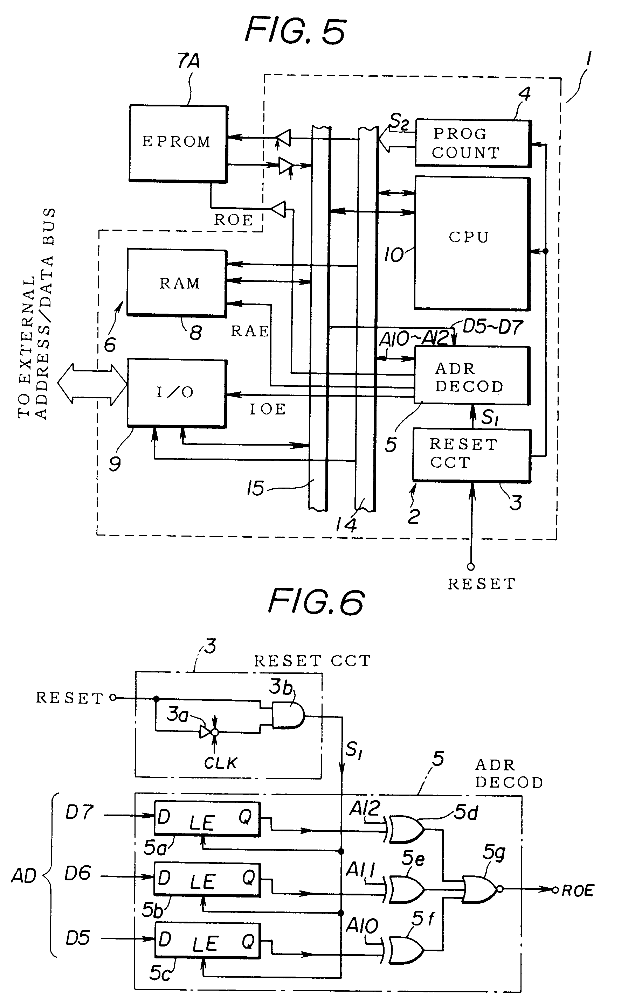

Fig. 4 shows an embodiment of a microprocessor according to the present invention and Fig. 5 generally shows an evaluation chip in an initial stage of development of the microprocessor shown in FIG.4 which is mass produced. In FIGS.4 and 5, a microprocessor 1 has an address control part 2, a memory part 6, an input/output port 9 and a central processing unit (CPU) 10 which are coupled to each other through an address bus 14 and a data bus 15.

The address control part 2 is made up of a reset circuit 3, a program counter 4 and an internal address decoder 5. The reset circuit 3 outputs a control signal S₁ for carrying out an initial setting of the inside of the microprocessor 1 responsive to an external reset signal RESET. The program counter 4 is essentially an address generating means for incrementing a count every time a command is executed so as to output an address signal S₂ which indicates an address of a command which is to be executed next. When the reset circuit 3 outputs the control signal S₁, the program counter 4 sets the address signal S₂ to a predetermined value (for example, FFFD) and outputs the address signal S₂. The internal address decoder 5 outputs one of a ROM enable signal ROE, a RAM enable signal RAE and an input/output port enable signal IOE responsive to the address signal S₂ received from the program counter 4. The internal address decoder 5 outputs the ROM enable signal ROE at least when the address signal S₂ from the program counter 4 is set to the predetermined value (for example, FFFD). The enable signals ROE, RAE and IOE are designators for designating an object medium for every divided memory region which is obtained by dividing a memory space having a predetermined size into predetermined regions. For example, the ROM enable signal ROE designates a mask ROM 7 as the object medium and enables only an access to the ROM 7 while the ROM enable signal ROE is outputted.

The memory part 6 is made up of the ROM 7 and a RAM 8. The ROM 7 stores programs including commands and various kinds of information. In the initial stage of development of the microprocessor 1, an external electrically programmable ROM (EPROM) 7A is used as a piggy memory chip in place of the ROM 7 as shown in FIG.5, and this EPROM 7A is detachably mounted on the package of the microprocessor 1. An access to the RAM 8 is enabled while the RAM enable signal RAE is outputted.

The input/output port 9 includes input buffers and output buffers, and is coupled to various input/output interfaces provided externally to the microprocessor 1 via several ports. For example, the input or output circuit 9 is designated while the I/O enable signal IOE is outputted, and the transmission and reception of information between the input/output circuit 9 and the CPU 10.

The CPU 10 carries out various processes such as carrying out an operation on the data stored in the RAM 8 responsive to a command entered from the EPROM 7A and outputting a result of the operation through the input/output port 9.

In addition to the above described functions, the microprocessor 1 of this embodiment has the following additional functions. In other words, the internal address decoder 5 also functions as a holding means for storing an address region information AD which is obtained from within a predetermined address (for example, FFFD) of the EPROM 7A responsive to the predetermined value of the address signal S₂ when the reset circuit 3 outputs the control signal S₁. In addition, the internal address decoder 5 also functions as an access enable means for enabling an access to the EPROM 7A which is allocated to the predetermined address region by outputting the ROM enable signal ROE while certain upper bits of the address region information AD coincide with certain upper bits of the address signal S₂ received from the program counter 4. The address region information AD designates a specific accessible range of a memory space which is formed by the EPROM 7A, the RAM 6 and the input/output port 9 and designates the medium within this range. For example, a ROM region such as that show in FIG.l is designated when the upper two bits of the address region information AD are "10". In addition, the ROMs having different memory capacities may be designated by appropriately changing the value of the address region information AD.

FIG.6 shows an essential part of the microprocessor 1 for realizing the additional functions described above. In FIG.6, the reset circuit 3 has a gate 3a and an AND gate 3b. On the other hand, the internal address decoder 5 has D flip-flops 5a through 5c, exclusive-OR gates 5d through 5f and a NAND gate 5g.

The external reset signal RESET which passes through the gate 3a which operates responsive to a clock signal CLK and the AND gate 3b which constitutes a wave shaping circuit is supplied to the internal address decoder 5 as the control signal S₁. The control signal S₁ is supplied to latch enable terminals LE of the flip-flops 5a through 5c. The flip-flops 5a, 5b and 5c respectively enter bits D7, D6 and D5 of the address region information AD with a timing determined by the control signal S₁, and outputs these bits D7, D6 and D5 of the address region information AD from Q-output terminals thereof. In addition, the flip-flops 5a through 5c respectively hold these bits D7, D6 and D5 of the address region information AD until the next control signal S₁ is received. The bits D7, D6 and D5 outputted from the Q-output terminals of the flip-flops 5a, 5b and 5c are supplied to the respectively exclusive-OR gates 5d, 5e and 5f and compared with corresponding three bits A12, A11 and A10 of the address signal S₂ which are received from the program counter 4. The ROM enable signal ROE is outputted from the NAND gate 5g and is supplied to the EPROM 7A only when the two input bits coincide in all of the exclusive-OR gates 5d through 5f.

According to this arrangement, the region of the EPROM 7A on the memory map, for example, is determined by the address region information AD written at the predetermined address (for example, FFFD) of the EPROM 7A. In other words, when the external reset signal RESET is received, the address signal S₂ from the program counter 4 indicates the predetermined address (for example, FFFD). The access to the EPROM 7A is made depending on this address signal S₂, and the address region information AD which is written in advance is read out from the EPROM 7A. The read out address region information AD is stored in the flip-flops 5a through 5c of the internal address decoder 5 and is compared with the address signal S₂ which is thereafter received from the program counter 4. When making the comparison, the certain upper bits of the address region information AD and the address signal S₂ are compared. Hence, when the the compared bits of the address region information AD and the address signal S₂ coincide, a predetermined region of the memory space determined by the address region information AD is indicated by the result of the comparison. Accordingly, when the ROM enable signal ROE is outputted when the compared bits coincide, for example, the object medium of the predetermined region is the EPROM 7A. Furthermore, the position of the object medium on the memory map may be changed by appropriately changing the value of the address region information AD, so that it is possible to freely cope with the case where the memory capacity of the EPROM 7A is large, for example.

According to this embodiment, the address region information AD indicating the region on the memory map is written at the predetermined address of the EPROM 7A, and the address region information AD is stored within the address decoder 5 when the external reset signal RESET is received. Thereafter, the address signal S₂ received from the program counter 4 and the address region information AD are compared, and the location of the EPROM 7A on the memory map, for example, is determined depending on the result of the comparison. Hence, it is possible to make a programmable memory mapping by appropriately changing only the address region information of the EPROM 7A. For example, it is unnecessary to prepare an evaluation chip (which is used as the EPROM 7A) exclusively for the different versions of microprocessor even when these versions have ROMs with different memory capacities. Therefore, it is possible to considerably reduce the production cost of microprocessors compared to the conventional microprocessors.

In the described embodiment, the address region information AD is stored in the EPROM 7A. However, the storage location of the address region information AD is not limited to the EPROM 7A, and for example, it is possible to store the address region information AD in an extended memory provided externally to the microprocessor 1.

## Claims

1. A single-chip microprocessor comprising a central processing unit (10) for carrying out operations on data in dependence on commands of a program, said data and program being stored in a memory;
characterised by:-
a memory part (7, 8) including a memory (7) for storing the program;
holding means (5) arranged to receive address region information at a predetermined timing and to hold the address region information, said address region information indicating an allocation of a predetermined address region for said memory (7);
address generating means (4) for generating an address of a command which is to be executed next; and
access enable means (5) for enabling access to said memory (7) when the address generated by said address generating means (4) is included in said predetermined address region.

2. The microprocessor as claimed in claim 1, wherein said memory (7) stores the address region information.

3. The microprocessor as claimed in claim 1 or 2, wherein said memory (7) is a read-only memory.

4. The microprocessor as claimed in claim 1, 2 or 3, further comprising reset means (3) for making an initial setting of the microprocessor by outputting a control signal in response to an external reset signal.

5. The microprocessor as claimed in claim 4, wherein said memory (7) stores the address region information and said holding means (5) comprises an internal address decoder (5) for holding the address region information which is read out from an address of said memory (7) designated by the address signal when said reset means (3) outputs the control signal.

6. The microprocessor as claimed in claim 4, wherein said memory (7) stores the address region information and said access enable means (5) comprises an internal address decoder (5) for enabling an access to said memory by outputting an enable signal during a time in which a value of at least a portion of the address region information coincides with a value of a portion of the address generated by said address generating means (4).

7. The microprocessor as claimed in claim 6, wherein the value of said address region information is variable depending on a location of the predetermined address region which is allocated for said memory (7) on a memory map.

8. The microprocessor as claimed in any preceding claim, wherein said address generating means (4) comprises a program counter (4) for incrementing a count every time a command is executed by said central processing unit (10) and for generating the address of the command which is to be executed next.

9. The microprocessor as claimed in any preceding claim, wherein said memory part (7, 8) comprises a random access memory (8) and a read-only memory (7), said read-only memory constituting said memory.

10. The microprocessor as claimed in any preceding claim, wherein said memory (7) stores the address region information, a value of said address region information being variable depending on a location of the predetermined address region which is allocated for said memory on a memory map.

11. A system comprising the microprocessor as claimed in any preceding claim, in combination with an external memory (7A) which is detachably mountable to the microprocessor and which has a corresponding function to said memory (7) of the microprocessor.

## Patentansprüche

1. Einchip-Mikroprozessor, umfassend eine Zentralprozessoreinheit (10), geeignet zum Ausführen von Operationen auf Daten abhängig von den Befehlen eines Programms, wobei die Daten und das Programm in einem Speicher gespeichert werden, gekennzeichnet durch,
ein Speicherteil (7, 8), das einen Speicher (7) zum Speichern des Programms enthält;
eine Halteeinrichtung (5), die zum Empfangen von Adreßbereichsinformation zu vorbestimmten Zeiten und zum Halten der Adreßbereichsinformation eingerichtet ist, wobei die Adreßbereichsinformation die Zuteilung eines vorbestimmten Adreßbereichs für den Speicher (7) anzeigt;
eine Adreßerzeugungseinrichtung (4), geeignet zum Erzeugen der Adresse eines Befehls, das als nächstes auszuführen ist; und
eine Zugriffsfreigabeeinrichtung (5), geeignet zum Freigeben des Zugriffs auf den Speicher (7), wenn die Adresse, die die Adreßerzeugungseinrichtung (4) erzeugt hat, im vorbestimmten Adreßbereich enthalten ist.

2. Mikroprozessor nach Anspruch 1, wobei der Speicher (7) die Adreßbereichsinformation speichert.

3. Mikroprozessor nach Anspruch 1 oder 2, wobei der Speicher (7) ein Festwertspeicher (Read-Only Memory) ist.

4. Mikroprozessor nach Anspruch 1, 2 oder 3, der zudem eine Rücksetzeinrichtung (3) umfaßt, dazu geeignet, die Anfangseinstellung des Mikroprozessors durch Ausgabe eines Steuersignals abhängig von einem äußeren Rücksetzsignal vorzunehmen.

5. Mikroprozessor nach Anspruch 4, wobei der Speicher (7) die Adreßbereichsinformation speichert und die Halte-einrichtung (5) einen internen Adreßdecoder (5) umfaßt, geeignet zum Halten der Adreßbereichsinformation, die aus einer Adresse des Speichers (7) ausgelesen und vom Adreßsignal bezeichnet wird, wenn die Rücksetzeinrichtung (3) das Steuersignal ausgibt.

6. Mikroprozessor nach Anspruch 4, wobei der Speicher (7) die Adreßbereichsinformation speichert und die Zugriffsfreigabeeinrichtung (5) einen internen Adreßdecoder (5) umfaßt, geeignet zum Freigeben des Zugriffs auf den Speicher durch Ausgeben eines Freigabesignals während einer Zeitspanne, in der ein Wert von mindestens einem Abschnitt der Adreßbereichsinformation mit einem Wert eines Abschnitts der Adresse zusammenfällt, den die Adreßerzeugungseinrichtung (4) erzeugt.

7. Mikroprozessor nach Anspruch 6, wobei der Wert der Adreßbereichsinformation veränderbar ist, und zwar abhängig von einem Ort des vorbestimmten Adreßbereichs, der dem Speicher (7) auf einer Speichertabelle zugeteilt ist.

8. Mikroprozessor nach irgendeinem vorhergehenden Anspruch, wobei die Adreßerzeugungseinrichtung (4) einen Programmzähler (4) umfaßt, dazu geeignet, jedesmal hochzuzählen, wenn die Zentraleinheit (10) einen Befehl ausführt, und dazu, die Adresse des Befehls zu erzeugen, das als nächstes auszuführen ist.

9. Mikroprozessor nach irgendeinem vorhergehenden Anspruch, wobei das Speicherteil (7, 8) einen Speicher mit wahlfreiem Zugriff (8) (Random Access Memory) umfaßt sowie einen Festwertspeicher (7) (Read-Only Memory), und der Festwertspeicher den Speicher bildet.

10. Mikroprozessor nach irgendeinem vorhergehenden Anspruch, wobei der Speicher (7) die Adreßbereichsinformation speichert und ein Wert der Adreßbereichsinformation veränderbar ist, und zwar abhängig von einem Ort des vorbestimmten Adreßbereichs, der für den Speicher in einer Speichertabelle zugeteilt ist.

11. System, umfassend den Mikroprozessor nach irgendeinem vorhergehenden Anspruch in Verbindung mit einem äußeren Speicher (7A), der auf dem Mikroprozessor abnehmbar montiert werden kann, und der eine dem Speicher (7) des Mikroprozessors entsprechende Funktion hat.

## Revendications

1. Microprocesseur monopuce comprenant une unité centrale de traitement (10) pour réaliser des opérations sur des données en fonction des commandes d'un programme, lesdites données et programmes étant stockés dans une mémoire ;
caractérisé par :
une partie de mémoire (7, 8) comprenant une mémoire (7) pour stocker le programme ;
un dispositif de maintien (5) disposé pour recevoir des informations de zone d'adresse à un instant prédéterminé et pour maintenir les informations de zone d'adresse, lesdites informations de zone d'adresse indiquant une allocation d'une zone d'adresse prédéterminée pour ladite mémoire (7) ;
un dispositif de génération d'adresse (4) pour générer une adresse d'une commande qui est à exécuter ensuite ; et
un dispositif de validation d'accès (5) pour valider un accès à ladite mémoire (7) lorsque l'adresse générée par ledit dispositif de génération d'adresse (4) est inclue dans ladite zone d'adresse prédéterminée.

2. Microprocesseur selon la revendication 1, dans lequel ladite mémoire (7) stocke les informations de zone d'adresse.

3. Microprocesseur selon la revendication 1 ou 2, dans lequel ladite mémoire (7) est une mémoire ROM.

4. Microprocesseur selon la revendication 1, 2 ou 3, comprenant en outre un dispositif de réinitialisation (3) pour effectuer un réglage initial du microprocesseur en fournissant un signal de commande en réponse à un signal de réinitialisation externe.

5. Microprocesseur selon la revendication 4, dans lequel ladite mémoire (7) stocke les informations de zone d'adresse et ledit dispositif de maintien (5) comprend un décodeur d'adresse interne (5) pour maintenir les informations de zone d'adresse qui sont extraites d'une adresse de ladite mémoire (7) désignées par le signal d'adresse lorsque ledit dispositif de réinitialisation (3) fournit le signal de commande.

6. Microprocesseur selon la revendication 4, dans lequel ladite mémoire (7) stocke les informations de zone d'adresse et ledit dispositif de validation d'accès (5) comprend un décodeur d'adresse interne (5) pour valider un accès à ladite mémoire en fournissant un signal de validation pendant un temps dans lequel une valeur d'au moins une partie des informations de zone d'adresse coïncide avec une valeur d'une partie de l'adresse générée par ledit dispositif de génération d'adresse (4).

7. Microprocesseur selon la revendication 6, dans lequel la valeur desdites informations de zone d'adresse est variable en fonction de l'emplacement de la zone d'adresse prédéterminée qui est allouée à ladite mémoire (7) sur une carte de mémoire.

8. Microprocesseur selon l'une quelconque des revendications précédentes, dans lequel ledit dispositif de génération d'adresse (4) comprend un compteur de programme (4) pour augmenter d'un incrément un compteur chaque fois qu'une commande est exécutée par ladite unité centrale de traitement (10) et pour générer l'adresse de commande qui est à exécuter ensuite.

9. Microprocesseur selon l'une quelconque des revendications précédentes, dans lequel ladite partie de mémoire (7, 8) comprend une mémoire d'accès aléatoire (8) et une mémoire ROM (7), ladite mémoire ROM constituant ladite mémoire.

10. Microprocesseur selon l'une quelconque des revendications précédentes, dans lequel ladite mémoire (7) stocke les informations de zone d'adresse, une valeur desdites informations de zone d'adresse étant variable en fonction d'un emplacement de la zone d'adresse prédéterminée qui est allouée pour ladite mémoire sur une carte de mémoire.

11. Système comprenant le microprocesseur selon l'une quelconque des revendications précédentes, en combinaison avec une mémoire externe (7A) qui peut être montée de façon détachable sur le microprocesseur et qui a une fonction correspondant à ladite mémoire (7) du microprocesseur.
